# EUROPEAN PATENT APPLICATION

(11) **EP 4 327 902 A1**
(43) Date of publication of application: **28.02.2024**
(21) Application number: 22192182.8
(22) Date of filing: 25.08.2022
(51) Int. Cl.: A63F 13/65, G06T 13/40, G06V 40/20, H04N 13/279

(54) **SPORTS METAVERSE**

(71) Applicant: Sporttotal Technology GmbH, 50829 Köln (DE)
(72) Inventor: CHICAN, Guillaume, 56400 Auray (FR); MASOOD, Kasar, 10117 Berlin (DE)
(74) Representative: Richly & Ritschel Patentanwälte PartG mbB

(57) **Abstract**

A computer implemented method for rendering a video stream comprising a virtual view of a sport event comprising: from a cloud-based server to a user device, provide parameters defining the appearance and motion of participants of the sport event, said parameters having been obtained by an archive monocular video stream of at least one previous event of the sport by fitting the parameters to a parametric human model of the participant of the sport event; from a cloud-based server to a user device, transmit continuously from a cloud based server to a user device, positional and pose data of the sport event participants of a video stream of a live sport event; on the user device, provide a neural rendering of a view of the live sport event based on the parameters defining the appearance and motion of sport event participants obtained by the at least one archive monocular video stream and the positional and pose data of the sport event participants of the video stream of the live sport event; by the user device, display the rendered view.

## Description

### Background

There is desire for providing virtualized presentations of sport events, especially of live broadcast sport events, like football or basketball. Due to the virtualization 3D presentations of the sport event can be produced which allow the subsequent manipulation of the virtualized event, for example, changing the direction of view onto the sport event or zooming into the event, augmenting the presentation of view with additional features, like lines for clarifying whether an offside situation is present and so on.

For example, a technique often used is multi view geometry, in which multiple cameras are positioned around a sport event. Technologies in this area are known as "Unity Metacast", "Cannon Free Viewpoint", and "Intel True View." The views of the multiple cameras are used in combination to provide a volumetric presentation of the sport event. The volumetric presentation comprising millions of voxels or triangulated vertices is transferred from a remote server to a user device. Based on the chosen direction of view onto the sport event a 2D representation of the volumetric presentation can be rendered and displayed.

This method requires many cameras, requires to transfer every second millions of voxels or triangulated vertices and therefore has a high demand on bandwidth. Thus to limit the amount of bandwidth it is usually required to provide a rather lower rendering quality.

Another method involves motion capture applied to avatars captured of the participants of the sport events in a studio. Such methods are provided, for example, by Mark Roberts Motion Control (MRMC) of Nikon. This method requires the presence of players in a studio to capture their appearance prior to using the method.

Another method involves motion capture applied to standard mannequins. Such methods are provided, for example, by the Hawk-eye SkeleTRACK technology of Sony. This method shows the participants/players as standard mannequins, i.e. without individual features.

Therefore, there is a need for a method that can be based on a single camera view (monocular view), provides representations of the participants which are individualized and, if possible, detailed and has low requirements with regard to bandwidth.

### Summary

To meet this need a method and system are provided as indicated in the appended claims.

In particular, a computer implemented method for rendering a video stream is disclosed comprising a virtual view of a sport event comprising: from a cloud-based server to a user device, provide parameters defining the appearance and motion of participants of the sport event, said parameters having been obtained by an archive monocular video stream of at least one previous event of the sport by fitting the parameters to a parametric human model of the participant of the sport event; from a cloud-based server to a user device, transmit continuously, positional and pose data of the sport event participants of a video stream of a live sport event; on the user device, provide a neural rendering of a view of the live sport event based on the parameters defining the appearance and motion of sport event participants obtained by the at least one archive monocular video stream and the positional and pose data of the sport event participants of the video stream of the live sport event; by the user device, display the rendered view.

A system for performing the method is also disclosed. In addition, a user device is disclosed performing the steps of the method performed on the user device.

In addition, a method is disclosed for providing a system performing the above method.

### Detailed Description

### Definitions

The term "sport event" means any temporary holding of a sports competition. In particular, sports events may be team events or a match between two teams. In particular, the sports event may be a ball sport, and it may be ball sports with individual participants or teams. The ball may be spherical, oval-shaped, disc-shaped, or ring-shaped. The sporting event may be a scoring game, especially soccer, basketball, American soccer, or handball, or a throwback game, especially tennis, table tennis, or badminton, a batting game, especially baseball, cricket, or softball.

In a sport event, there is a playing "venue" or field where the sport event is played. On this venue, there are non-movable objects that are relevant for the execution of the game event according to the rules of the sport event. In soccer, these can be the kick-off circle, the corners, the goal area, the outer lines at the goal or/and at the side, and/or the center line. In basketball, these can be side sidelines, the end lines, the center line, center circle, the zone around the baskets, the semicircle, the three-point line, and/or the no-charging semicircle.

A "user device" is a device used by a user to watch the virtual view of the sport event. Thus, a user device can be a set-top box, a computer connected to a screen, or a hand-held device. A hand-held can be a mobile device like a tablet or mobile phone with a screen or alternatively/in addition be capable of forwarding the virtual view of the sport event to a screen.

A "virtual view of a sport event" is a rendered (e.g. two dimensional, 2D) representation of a sport event.

A "cloud-based server" is a remote computer which is connected to the user device via the internet. The connection over the internet may be provided by any suitable physical means like a cable bound or wireless form of data transfer or a mixture thereof.

A "participating person" is any person involved in participating in the sport event, i.e. a player or referee, especially a player.

A "neural method" is a method involving the use of deep learning (also known as deep structured learning) which is part of a broader family of machine learning methods based on artificial neural networks with representation learning. Learning can be supervised, semi-supervised or unsupervised. A deep learning neural network (or neural method) learns to map a set of inputs to a set of outputs from training data. A deep learning neural networks comprises function containing "weights" which are parameters that can be adapted during learning to improve the mapping of the inputs to the outputs. Typically, a neural network model is trained using the stochastic gradient descent optimization algorithm and weights are updated using the backpropagation of error algorithm. The "gradient" in gradient descent refers to an error gradient. The model with a given set of weights is used to make predictions and the error for those predictions is calculated. The gradient descent algorithm seeks to change the weights so that the next evaluation reduces the error, meaning the optimization algorithm is navigating down the gradient (or slope) of error.

In the context of an optimization algorithm, the function used to evaluate a candidate solution (i.e. a set of weights) is referred to as the objective function. It may be desirable maximize or minimize the objective function, meaning that we are searching for a candidate solution that has the highest or lowest score respectively. Typically, with neural networks, it is desired to minimize the error. As such, the objective function is often referred to as a cost function or a loss function and the value calculated by the loss function is referred to as simply "loss." In the present application loss is determined as the difference between certain forms of the ground truth and the output determined by the neural network.

A "neural rendering method" is a method for rendering a 2D (or 3D) representation of a scene which involves the use of at least one neural network and allows to control at least one scene property like a camera view point or/and the pose of the body or/and the lightening. The neural rendering method as described herein uses parametric human body model parameters, texture maps and data on the camera parameters to provide 2D representation of a scene with variable camera view point. An image refinement method like an image-to-image or video-to-video translation method may also be contained in the neural rendering method described herein.

A "parametric human body model" is a function that takes as input a low number of small dimensional vectors and outputs 3D representation of a human body, wherein the 3D representation is usually in the form of meshes and/or vertices or in the form of a signed distance functions. The "parametric human body model" may also define "joints" in the model which are used to define the orientation of the body parts of the human model and are intended to simulate the real joints of the human (pose parameters). The orientation of the joints to each other defines the pose of the human body model. Shape parameters are parameters defining the shape of the 3D presentation including its height and extension.

Preferred are parametric human body model which can modify the shape and pose of a body (almost or completely) independently. For example, SMPL (Skinned Multi-Person Linear Model) is a well-established parametric human body model that takes an input vectors for shape and pose to provide a 3D mesh of a human body. The shape and pose vectors are applied to a predefined average mesh model of the human body. The function may be obtained by a neural network. The parameters for a parametric human body model may be fitted to the 2D or 3D representation of a human (or animal being) by a neural method.

### Methods for rendering a video stream comprising a virtual view of a sport event

A computer implemented method for rendering a video stream comprising a virtual view of a sport event is disclosed comprising: from a cloud-based server to a user device, provide parameters defining the appearance and motion of participants of the sport event, said parameters having been obtained by an archive monocular video stream of at least one previous event of the sport; from a cloud-based server to a user device, transmit continuously from a cloud based server to a user device, positional and pose data of the sport event participants of a video stream of a live sport event; on the user device, provide a neural rendering of a view of the live sport event based on the parameters defining the appearance and motion of sport event participants obtained by the at least one archive monocular video stream and the positional and pose data of the sport event participants of the video stream of the live sport event; by the user device, display the rendered view.

The step "from a cloud-based server to a user device, provide parameters defining the appearance and motion of participants of the sport event, said parameters having been obtained by an archive monocular video stream of at least one previous event of the sport" is usually only once required, and in contrast to the following step does not need to be repeated, i.e. does not require a continuous flow of data from the cloud-based server to the user device. Since the shape of the participants does not change, it is not required to transmit the shape parameters more than once.

The neural rendering method, although more specific implementations thereof are described below, may be any suitable neural rendering method. It is merely important that when data is transmitted continuously from a cloud-based server to a user device, the amount of data does not require a high bandwidth. For example, a parametric human body model may be used for transmitting information on the shape and pose of the participants. Parametric human body models allow to define 3D representations of human bodies (usually in the form of meshes and thus vertices) using low dimensional vectors. Therefore, during the transmission from the cloud-based server to the user device only the vectors, which because of their low dimensionality require little bandwidth, need to be transmitted. This captured information on the shape and pose (the latter changing with time and thus continuously transmitted information about the pose provides information on the motion of the participants) can be used in to render 2D representations of the players on the user device. This can be achieved by projecting, depending on the virtual view onto the sport event requested by the user device, the 3D representations of the participants into 2D representations. The rendering operation can be any suitable rendering operation or a combination of rendering and image refinement methods known in the art. For example, the rendering operation can be any image-to-image translation method known in the art like U-Net; or a neural radiance field, NeRF, which is trained in a pose-independent canonical space to predict color and density. The rendering of the 2D representations from the 3D body model representations by a neural method provides the advantage that the neural method can be trained and thus optimized for the individual participants or a group of the participants (e.g. the team formed by the participants).

In particular, a computer implemented method for rendering a video stream comprising a virtual view of a sport event can comprise:
a. Transferring from a data base in a cloud-based server to a user device data comprising
   i. a data set per person participating in the sport event, i.e. per participant, comprising parameters of a 3D model of the body of said person;
b. Determining in real time in a video stream of the sport event by the cloud based server:
   i. Camera parameters indicating the view of a single real camera, i.e. real camera parameters;
   ii. Positional and pose data of each participant;
c. Transferring in real time the real camera parameters and the positional and pose data of each participant from the cloud-based server to the user device;
d. Rendering in real time a virtual view of the sport event on the user device comprising the steps of:
   i. For each participant:
      1. Using the 3D model parameters of the bodies of each participant and the real time positional and pose data of each participant to provide a posed 3D representation of each participant;
      2. Transforming the pose of each 3D representation of the participants based on the real camera parameters and provided adjustable virtual camera parameters to provide a virtual camera dependent 3D representation of each participant;
      3. Render a 2D representation of each participant based on virtual camera dependent posed 3D representation of each participant;
   ii. For the venue:
      1. Render a 2D representation of the objects on the venue based on the real and virtual camera parameters using 3D meshes of the objects of the venue to provide a virtual venue;
   iii. compose a virtual view of the sport event from the 2D representations of each participant and the 2D representation of the objects.

The data set per participant transferred from the cloud-based server may comprise texture maps for each participant. When rendering in real time a virtual view of the sport event and using the 3D model parameters of the bodies of each participant, the texture maps and the corresponding positional and pose data are used to provide a posed 3D representation of each participant, which is textured.

The texture maps for the individual participants have been derived from the tracklets showing the participants from different perspectives. In this way it is possible to provide a full texture map providing information on the texture of all visible surfaces of the participant.

In particular, the individual texture maps for each participant may be transferred only once, for example, when the user device request from the server data on the live video stream of the sport event. The full texture map may be associated with the 3D representation of the participant to provide a textured 3D representation (e.g. mesh) of the participant before the pose and orientation of the textured 3D representation is adapted in view of the continuous information on the pose of the participant at the live sport event and the virtual view requested by the user device.

The virtual camera parameters, i.e. the parameters indicating the view of a virtual camera onto the rendered sport event, can be preset in the user device or have been provided by the user of the user device.

The virtual view onto the sport event can principally be set freely since the 3D representations of the participants available at the user device can be "viewed" from any perspective. A default view may be preset in the user device which may be the same view as the view of the real camera at the sport event. The virtual view may be changed with regard to the distance the participants of the sport event (zoom), or any translational or rotational variation that is input at the user device.

The 2D representation of each participant before composing the virtual view of the sport event on the user device can be refined using a (neural) rendering method. As stated above, the rendering operation can be any suitable rendering operation or a combination of rendering and image refinement methods known in the art. For example, the rendering operation can be any image-to-image translation method known in the art like U-Net or a neural radiance field, NeRF. The rendering of the 2D representations from the 3D body model representations by a neural method provides the advantage that the neural method can be trained and thus optimized for the individual participants or a group of the participants (e.g. the team formed by the participants).

The (neural) rendering operation may comprise transferring the data transferred from the cloud-based server comprises per team the weights for an (neural) image-refinement network model, especially a U-Net, stored on the user device, wherein optionally, the image-refinement network model populated with the weights is used to refine the 2D representation of each participant before composing the virtual view of the sport event on the user device.

The parametric 3D human body model can be a Skinned Multi-Person Linear model, SMPL as described in WO 2016/207311A1.

However, it is also possible to use other parametric 3D human body models as long as a set of lower dimensional vectors is sufficient to define the human body model. The lower dimensional vectors (for example of SMPL) may have less than 30 x 5, 25x4, 15, or 10 scalar values. Preferably, the shape parameter of the parametric 3D human body (for example of SMPL) has 8-12 or 10 scalar values and the pose parameter has 22-25 x 2-4 or 24 x 3 scalar values. The shape parameter defines an amount of expansion/shrink of a human subject along some direction such as taller or shorter. The pose parameter defines the relative rotations of joints with respective to their parameters. The number of joints may be increased or reduced. Each rotation may be encoded as an arbitrary 3D vector in axis-angle rotation representation.

The 3D model parameters can be shape parameters transferred non-continuously, i.e. defining the shape of the representation of the human body. The shape parameters define the shape of the 3D model and are sent from the cloud-based server to the user device usually only once.

The data transferred from a database to the cloud-based server can comprise per team the weights of a temporal parametric human body model (convolutional) neural network especially a SMPL fitting neural network, and the parametric human body model fitting neural network together with the human body model shape parameters, especially SMPL shape parameters, are used to provide a body mesh, especially a SMPL mesh. The database has been populated during training of the neural rendering method.

The data transferred from a database to the cloud-based server can comprise the weights of a temporal parametric human body model convolutional neural network (CNN), especially a SMPL fitting convolutional neural network, trained on multiple different teams and the parametric human body model fitting CNN together with the human body model shape parameters, especially SMPL shape parameters, are used to provide a body mesh, especially a SMPL mesh.

The data set per participant transferred from the cloud-based server can comprise texture maps for each participant. When rendering in real time a virtual view of the sport event, the meshes of the bodies of each participant, the texture maps and the corresponding positional and pose data are used to provide a posed 3D representation of each participant, which is textured.

In particular, the full texture map can be registered to the surface of the body model which has been modified using the shape parameters to imitate the shape of the body of the participant. Registering a (full) texture map amounts to covering the surface of the body model with the texture that is expected to be at the respective positions of the body. During the registration the mesh of the human body model is in a rest pose, a basic i.e. default pause taken by the human body model before it is transformed using the body model parameters like shape or pose parameters. Since the shape parameters do not affect the pose of the body model, the body model after application of the shape parameters is still in the rest (or basic) pose. This step is performed for every participant and depends on the identity of the participant. The information about the identity of the participant and the corresponding shape parameters are transferred from the cloud server to the user device. This step is performed usually only once during the method.

Subsequently, the user device continuously (e.g. per frame) receives information on the pose of the participant and his identity (pose parameter of the parametric human model).

The pose parameter is then applied to each textured body model of the participants depending on their identity. The positional data which is also associated with this identity and pose information is used to position the finally obtained 2D representation on the virtual venue.

The transferring in real time a stream of data from the sport event to the user device further comprises data designating the identity and team membership of each participant. The identity can be determined using object detection to determine the location of participants in the frames of the video stream followed by an optical character recognition method to identify the jersey numbers or/and the names on the jerseys and/or facial recognition to identify the participants. The team membership can be identified by determining that the teams use jerseys of different color. Optionally, the optical character recognition can be used to determine the name of the teams and also be included into the data to be transferred to the user device.

Determining the real camera parameters can comprise detecting objects designating the edges of the venue of the sport event, aligning the determined edges with a representation of the edges characteristic for the sport event and thereby determining the real camera position in relation to the venue of the sport event. The representation of the edges characteristic for the sport event can be predefined on the cloud-based server. The representation of the edges may be provided as a projection into a 2D area from a further predefined 3D model of the venue including the objections including the edges of the venue. This allows to infer the 3D coordinates of the real venue of the sport venue and subsequently the real data camera parameters. Since the real camera parameters can change over time these need to be continuously transferred to the user device.

The step of composing a virtual view of the sport event from the 2D representations of each participant and the 2D representation of the objects further can comprise augmenting the virtual view of the sport event with virtual objects. Virtual objects at issue may be indicators indicating participants or certain areas in the video stream, areas, arrows and the like.

### Methods for training a model capable of rendering a video stream comprising a virtual view of a sport event

Prior to executing the method for rendering a video stream comprising a virtual view of the sport event it is required to train a model that is capable of performing the rendering method.

The training methods allows to determine parameters defining the shape of a human body model of participant of a sport, the full texture map of the participant for this human body model, and optionally further parameters which may improve the rendered 2D representation of the 3D body model of the participant.

Thus, the method in step a. prior to transferring the data set can further comprise determining the 3D model parameters by analyzing at least two frames of a monocular view in a archive, i.e. second, video stream.

In particular, a method for training a system capable of providing of a novel view of monocular video stream comprising a sport event is disclosed, comprising
a. identifying and tracking the participants of the sport event in the archive video,
b. training a neural model to provide parametric human body model parameters including shape and pose parameters for each participant comprising analysing the appearances and motions of a participant across the frames of a tracklet of the archive video stream, building a full texture map for each participant for the human body model of the participant, and training a neural model to provide image refinement for 2D image projections of a textured human body model of each participant.

Thus, the method can comprise detecting in at least two frames, preferably subsequent frames, participants and their identity by image recognition. The method may further comprise identifying the jersey numbers of the participants and identifying the teams of the participants by the jersey color. Of note, the term subsequent frames comprises sequences of frames which are directly neighbored in the video stream or frames which are distanced from each other by the same or almost the same distance, e.g. distanced by 2, 3, 4, 5 frames.

Bounding boxes may be set around the identified participants. Each sequence of frames may thus contain bounding boxes tracking the identified participants. The method involves providing for each participant in at least two frames at least two bounding boxes. Each box identifies a "patch" comprising a section of the frame comprising the respective participant.

A "tracklet" is a sequence of sections (or patches) of images taken from a video stream following or tracking a participating person. Thus, a tracklet provides a sequence of images representing the movement of a participating person. The video stream may comprise 24-60 frames per second. Each patch contains a section of the original image that is smaller than the entire image (e.g. defined by an edge defined by a bounding box).

For each player at least 2, 3, 4, 4, 5, 6, 7, 8, or 10, preferably 10 tracklets are determined. A tracklet may comprise 2, 3, 4, 4, 5, 6, 7, 8, or 10 images or patches (area limited by the respective bounding box in the frame) of the participating person. In this way a catalogue of views on the participating person is provided, while limiting the overall amount of data to be processed. A first group of tracklets may be a series of RGB images.

For each tracklet, the (2D) shape of the participant can be detected by estimating a mask identifying the area of the patch that is occupied by the participant. A mask in the result of an object segmentation method and provides per pixel a binary labelling. The object segmention method may be a pretrained neural method. For example, the obtained mask indicates all the pixels occupied by the participant as having one value ("white") while the remaining pixels are labelled with a second different value ("black"). Thus, a second group of tracklets is provided wherein the patch is a series of images defined by only two (color) values.

Moreover, for each RGB tracklet the joints can be estimated in each 2D patch.

Then the tracklets and masked tracklets can be used with a neural rendering model including a temporal encoder to provide neural rendering model parameters characterizing the pose of the participant and a (full) texture map of the participant. The neural rendering model parameters can be used during inference to provide rendered versions of the participants identified in the first video stream.

The neural rendering model or method comprises a module for providing parametric human models parameters which is trained to provide the parametric human models parameters (shape, pose) for each participant of a video stream (Module for providing parametric human models parameters). Various methods for providing parametric human models parameters may be trained using various loss functions. The details are described below. This module allows to provide undressed 3D avatars of the participants in motion.

The neural rendering method can also comprise a module for providing a full texture map for each participant. This module allows to provide dressed version of the 3D avatars.

The neural rendering method can also comprise a (neural) image refinement method (an image-to-image or video-to-video translation method). This module allows to provide visual details of the 2D projections of the avatars that are not provided for by textured 3D avatars are extending beyond the silhouette of the textured 3D avatar, like clothing or hair extending beyond the silhouette of the 3D avatar.
- Module for providing parametric human models parameters

The module for providing parametric human models parameters can be a model configured to perform a regression-based SMPL fitting method.

For example, two different parametric human body model parameter model (here SMPL) fitting approaches can be used: one based on VIBE ("Video Inference for Human Body Pose and Shape Estimation", Kocabas, Muhammed and Athanasiou, Nikos and Black, Michael J., Proceedings IEEE Conf. on Computer Vision and Pattern Recognition (CVPR), pages 5252-5262, IEEE, June, 2020) and one based on ROMP ("Monocular, One-Stage, Regression of Multiple 3D People", Sun, Yu and Bao, Qian and Liu, Wu and Fu, Yili and Black, Michael J. and Mei, Tao, Proceedings of the IEEE/CVF International Conference on Computer Vision (ICCV), pages 11179-11188, October, 2021). Other parametric human body model parameter model fitting approaches may also be used (for example, see https://arxiv.org/abs/2203.01923; Tian, Yating and Zhang, Hongwen and Liu, Yebin and Wang, Limin; "Recovering 3D Human Mesh from Monocular Images: A Survey", arXiv, 2022, especially those listed in table 3 at page 12.

It is a particular advantage to use regression based parametric human body model parameter model, wherein regression is used to infer the 3D representation of the human that minimizes the joint reprojection error (see e.g. chapter Iterative 3D Regression with Feedback in "End-to-end Recovery of Human Shape and Pose", Kanazawa, Angjoo and Black, Michael J. and Jacobs, David W. and Malik, Jitendra, arXiv, 2017).

The joint reprojection error refers to the error between the location of the joints in an 2D representation of a 3D human model in the image plane obtained after determining parameters of the human body model with the original image or patch of that image of a frame of the video stream used for training the neural network.

Thus, the method may involve the use of a regression based parametric human body model parameter model.

VIBE processes tracking data, i.e. time sequences of patches. The player patches are provided by an object detection algorithm (e.g. network). The network comprises a backbone network (a CNN), a recurrent network (e.g. comprising gated recurrent unit layer(s) ) and a regressor.

The backbone network of VIBE can extract feature vectors for each patch, which are passed as a set of feature vectors to a recurrent network (temporal encoder) and the obtained feature vectors are then passed to a regressor that predicts the SMPL pose and shape parameters for each patch.

ROMP can process the full image directly. Unlike VIBE, it removes the need to use an object detector and is therefore faster than VIBE. ROMP is composed of a backbone network and a regressor. The backbone extract two feature maps: the body center heatmap indicating the position of a player in an image rame and the SMPL feature map per frame. Each pixel of the body center heatmap gives a confidence score of the presence of a body center at this pixel location. The SMPL feature map is a volume containing the SMPL and camera parameters at each pixel. The pixel with high confidences of the body center heatmap are classified as body centers, and the corresponding pixel values in the SMPL feature map are sampled. As a result, the model predicts the SMPL parameters for people that are detected in the image.

In ROMP the ground truth body centers are defined as the center of the torso. If two people are closed one from the other, then the body centers are pushed apart. In the ROMP method a function for this purpose is defined, which is inspired from the electric repulsive field equation. This allows ROMP to handle challenging person-person occlusions.

ROMP is better than the original version of VIBE proposed by Kocabas et al. to handle person-person occlusions, due to this repulsion function.

However, VIBE can be improved in this application against occlusions, based on data augmentation with synthetic random occlusions. The player patches of the tracklet were masked with white circles and squares of random sizes at random locations. This data augmentation technique enforces the model to uses features of the past in the sequence in order to better handle occlusion has surprisingly improved the original VIBE method, in particular, with regard to video streams comprising multiple person.

Thus, during training of the neural model providing the parametric human body model parameters the image patches of a tracklet can be provided with random occlusions.

VIBE as used in the present applicaiton can be trained with a motion discriminator, which is a neural network, especially a Generative adversarial network, GAN. Kocabas et al. have created a mocap database called AMASS AMASS (Archive of Motion Capture As Surface Shapes, Max Planck Institute) comprising a data set of sequences of motion sequences of humans defined by SMPL parameters (thus this data base provides ground truth data for the training).

However, any motion discriminator, any neural model, capable of determining whether a sequence of inputted poses is realistic can be used.

The motion discriminator network learns to discriminate between real and fake motion (real being the AMASS SMPL data and fake being the output SMPL motion data provided by the regressor during training), the SMPL fitting network is trained to produce SMPL motion data that look real to the discriminator. As a result, VIBE enforces temporal consistency and produces realistic motion data.

In the present application the motion capture library used as ground truth training only comprises sports related motion (running, jumping, etc). Thus, the AMASS library has been filtered for motion caps of sports related motion before starting training. However, other motion capture libraries comprising frame sequences of running and/or jumping may also be used

The original version of ROMP (by Sun, Y. et al.) is not a temporal approach like VIBE, because it works with images whereas VIBE works with sequences of images. Therefore, there is some jitter in the SMPL data produced by ROMP. In this application temporal filtering techniques - based on tracking and smoothing - can be been applied to smooth the SMPL parameters obtained with ROMP and produce realistic motion data. For example, a Discrete Cosine Transform (DCT) filter may be used (e.g. the DCT filter described in "Towards Accurate Marker-less Human Shape and Pose Estimation over Time"; Huang, Yinghao and Bogo, Federica and Lassner, Christoph and Kanazawa, Angjoo and Gehler, Peter V. and Romero, Javier and Akhter, Ijaz and Black, Michael J.; International Conference on 3D Vision (3DV); 421-430; 2017; https://arxiv.org/pdf/1707.07548.pdf). The method first tracks the participant across the frames. Then, it runs the SMPL function and the joint regression function to predict the joint 3D positions for each track/player at each frame. The 3D joint positions over a temporal window of N frames form 3D trajectories. The method smooths out the 3D trajectories by using a DCT filter: it only applies P first DCT basis functions, P being smaller than N, to truncate the N - P higher DCT coefficients and this way removes the high motion frequencies. Finally the method uses the smoothed 3D trajectories as input of an optimization problem: the SMPL parameters are optimized so the predicted 3D joints fit the smoothed 3D trajectories.

Those motion captures may originate from AMASS (Archive of Motion Capture As Surface Shapes, Max Planck Institute). Those relevant motion captures may be belong to the category of dribbling, running etc. Thus, the tracklets containing the 2D moving players are fitted to the moving 3D human bodies of the motion captures. In particular, the joints in the 2D patches of the tracklets can be fitted to the into 2D projected presentations of the human bodies of the parametric human model. In this way, the shape parameters of the parametric human body model can be obtained for each player and the neural network is trained based on an input video to associate the identified participant with a specific parametric human model shape parameter and a texture map, and to provide per frame parametric human model pose parameters for each participant.

During training the loss of the neural model can comprise several loss terms. The same losses apply to both VIBE and ROMP as used here and could also be applied to different methods.

The first loss used is the" joint/keypoint projection loss (see Kocabas et al. "3.1. Temporal Encoder"), especially the 2D joint projection loss which compares the position of the 2D joints in the ground truth frames (e.g. determined by OpenPose ) with the projected position of the 3D joints of the human body model provided by the estimated parametric human body model parameters into the 2D image layer.

Optionally, a silhouette loss can also be used, in particular, a soft silhouette loss. A soft silhouette is a silhouette of a 3D model into the image plane using a soft rasterizer which is explained below.

Joints can be a weak signal as they do not contain enough shape information. 3D keypoints are very sparse information and usually captured in studio with low diversity in data, which limits the generalization of the model. 2D keypoints present depth ambiguities in the sense that multiple different configurations of 3D joints lead to the same 2D joint positions when projected on the image plane. The present method does not require to use unpaired data.

A supervision technique to overcome the lack of information inherent to keypoints, based on the silhouette can be used. The data collection pipeline generates player masks automatically by running an image segmentation model (e.g. using Deeplap V3, see Chen, Liang-Chieh and Papandreou, George and Schroff, Florian and Adam, Hartwig, "Rethinking Atrous Convolution for Semantic Image Segmentation", arXiv, 2017). Player masks are usually accurately predicted in sports scenes and image segmentation is usually an easy task for sports scenes because the background is the court and is uniform. The training pipeline passes the SMPL mesh to Soft Rasterizer to generate a soft silhouette (see the below paragraph for a summary of the Soft Rasterizer technique, however another method for providing 2D silhouettes from 3D human body models may also be used). As SMPL bodies are undressed, the SMPL soft silhouette should always be inside the player mask. Therefore, our training pipeline penalizes the ratio of SMPL soft silhouette pixels that are outside the player mask. This strong supervision improved the SMPL fitting methods significantly in our tests compared to a training only supervised by the keypoint projection loss, and the "monster meshes" do not appear anymore.

The 2D silhouettes from 3D human body models may be provided by using a soft rasterizer.

Soft Rasterizer is a recent technique to make rendering operations differentiable (Liu, Shichen and Li, Tianye and Chen, Weikai and Li, Hao, "Soft Rasterizer: A Differentiable Renderer for Image-based 3D Reasoning", arXiv. Traditional rendering techniques involve rasterization (where for each pixel, we want to know which 3D primitive covers this pixel) and shading (where we compute the color of each pixel, it involves some lighting computations). Shading is naturally differentiable (relies on interpolation of vertex data) but rasterization is a discrete sampling operation (in both image x-y coordinates due to boundary and z coordinates due to occlusion and z-buffering) and therefore it has discontinuities and it is not differentiable. Soft rasterizer "softens" the discrete rasterization to enable differentiability. It makes triangles transparent at boundary and it blends multiple triangles per pixel. As a result, pixel color depends on several triangles, not only one, which makes pixel color differentiable with respect to triangle position.

Optionally, a shape variance loss is also used.

The variance of all shape vectors predicted from all tracklets corresponding to the same player is minimized during training, to enforce the consistency of the player shape for all body orientations.

After training an average value of the parametric human body model shape parameters is used, i.e. associated with a particular player. Thus, during inference the shape parameter does not need to be determined, but can be inferred from the identification of the player during inference (identification performed by jersey number recognition or face recognition or the like).

Optionally, the method can also be used by combining the regressor step yielding the parametric body model parameters with an optimizer method. This approach is called "pseudo-3D supervision".

Optimization-based methods can be used as additional supervision for training a regressor, leading to a more accurate regressor (see Kolotouros, Nikos and Pavlakos, Georgios and Black, Michael J. and Daniilidis, Kostas, "Learning to Reconstruct 3D Human Pose and Shape via Model-Fitting in the Loop", Proceedings of the IEEE/CVF International Conference on Computer Vision (ICCV), 2019). In the present application a similar approach is used: generating SMPL data with optimization and use the obtained SMPL parameters as ground-truth data during the training of the model.
- Module for providing a full texture map

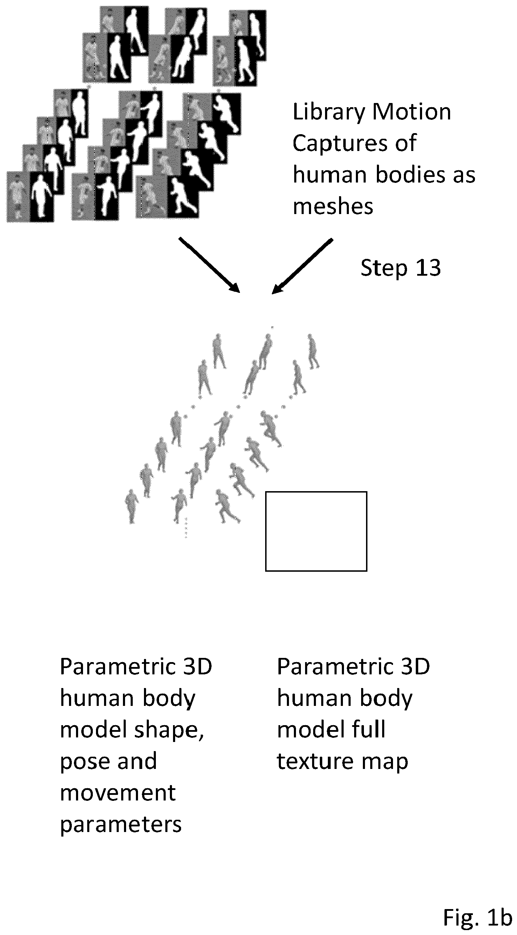

In addition, (full) texture maps of the players can be generated. The texture map is a collection of textures that the SMPL algorithm can associate with the body parts of the avatars (like those in the middle of Fig. 1b). In this way, the avatars are provided during rendering with a texture covering the avatars, the texture indicating skin, hair, clothes etc.

The parametric human body model parameters (e.g. SMPL data) for each patch of the tracklets (obtained either with ROMP our VIBE) are obtained after training and can be used in the preparation of the texture maps. One of the parametric human body model parameters (the first parameter of the SMPL pose parameters) is the global body orientation. It can be used to create an histogram of body orientations. Some key patches are selected, e.g. by a method identifying those patches showing the participants with preselected body orientations. Each key patch can belong to a different interval of the histogram. An histogram of N bins leads to N key patches. However, the (key) patches used to provide the texture maps may also be selected on different criteria.

The texture map is provided from the key patches. The SMPL mesh determined by the trained method can be projected onto the 2D image plane. Subsequently, the fitted mesh on the image plane is rasterized. The uv coordinates by using the barycentric coordinates for each pixel in the rasterized output are determined (including interpolation). Finally the texture map is generated by sampling the key patches of the ground truth images with the obtained uv coordinates.

Several regions of the same image may correspond to the same pixel in the texture ap. To remove this ambiguity, the most orthogonal texel to the camera can be picked.
- Module for image refinement

Optionally, appearance of the textured avatars (i.e. the human model), can be further optimized by fitting a rendered textured 2D mesh of the generated 3D avatars and a mask obtained thereof to the corresponding ground truth patches containing the (original) views of the respective players and the mask obtained thereof (output of step 12) using an image rendering algorithm (e.g. a (neural) image-to-image translation or a (neural) video-to-video translation method, ), for example an image refinement algorithm like U-Net or video-to-video translation method like vid2vid by Nvidia. Many parametric human body models are models of undressed humans and thus a textured parametric human model often does not appear realistic. For example, SMPL is a model of undressed bodies (it has been trained with the CAESAR dataset, composed of undressed body 3D scans). The rendered SMPL mesh does not look like a normal dressed body. The loss based on the silhouettes can be used in this case to provide details of the respective avatar that are not provided for by the textured human body model.

To recover/refine the details an image-translation network is used and the image-translation method synthesizes a realistic appearance. The training set for the neural network may comprise multiple different players in multiple poses. The optimization function may be L1 loss and image GAN loss. Thus, the trained image refinement algorithm can be used to further improve the rendered 2D mesh of the avatars. Thus, this step for example, provides a neural learning model and the weights obtained during training of said model.

Thus, the video stream used for determining the 3D model parameters is at least one archive or second video stream that was/were recorded before the (first) video stream used for determining camera parameters indicating the view of a single real camera, i.e. real camera parameters or positional and pose data of each participant. The at least second video stream comprises a sport event in which at least one of the persons participating in the first video stream is participating in the same kind of sport event in the second video stream.

The method involves tracking and identifying participating persons (e.g. players) in the archive video, and then analyses the appearances of players across the at least two frames of the videos, so it captures their appearances for multiple body orientations and can build a full texture map. To build the full texture map, the system fits a parametric human body model, e.g. a SMPL model, to player patches corresponding to different body orientations and back project the player patches to all vertices of the parametric human body model mesh.

The method can involve applying an image segmentation network to remove the background of each player patch. Thus, the neural renderer can be trained to synthesize player images without background.

The neural model is a model that can be trained with motion in addition to appearance (texturing). Thus, the neural rendering model (e.g. SMPL-fitting model) can be a temporal model that learns how to produce smooth and realistic player motion data.

Thus, one of the main advantages of the method is to automatically capture both appearance and motion of players from archive videos with neural rendering, and then to use the obtained player models during a live game to synthesize any novel view of the sport event.

### System for rendering a video stream comprising a virtual view of a sport event

Also disclosed is a system for executing the methods described above.

Thus, it is provided a system comprising a cloud based server and a user device, wherein
the cloud based server is configured to
a. transfer from a data base in the cloud-based server to a user device data comprising
   i. a data set per person participating in the sport event, i.e. per participant, comprising parameters of a 3D model of the body of said person;
b. determine in real time in a video stream of the sport event by the cloud based server:
   i. Camera parameters indicating the view of a real camera, i.e. real camera parameters;
   ii. Positional and pose data of each participant;
c. transfer in real time the real camera parameters and the positional and pose data of each participant from the cloud based server to the user device; and
   the user device is configured to
d. render in real time a virtual view of the sport event on the user device comprising the steps of:
   i. For each participant:
      1. Using the 3D model parameters of the bodies of each participant and the real time positional and pose data of each participant to provide a posed 3D representation of each participant;
      2. Transforming the pose of each 3D representation of the participants based on the real camera parameters and adjustable provided virtual camera parameters to provide a virtual camera dependent 3D representation of each participant;
      3. Render a 2D representation of each participant based on virtual camera dependent posed 3D representation of each participant;
   ii. For the venue:
      1. Render a 2D representation of the objects on the venue based on the real and virtual camera parameters using 3D meshes of the objects of the venue to provide a virtual venue;
e. compose a virtual view of the sport event from the 2D representations of each participant and the 2D representation of the objects.

Also disclosed is a computer implemented method for rendering a video stream comprising a virtual view of a sport event on a user device:
a. Receiving from a data base in a cloud-based server to a user device data comprising
   i. a data set per person participating in the sport event, i.e. per participant, comprising parameters of a 3D model of the body of said person;
b. Receiving in real time based on a video stream of the sport event by the cloud based server:
   i. Camera parameters indicating the view of a real camera, i.e. real camera parameters;
   ii. Positional and pose data of each participant;
c. Rendering in real time a virtual view of the sport event on the user device comprising the steps of:
   i. For each participant:
      1. Using the 3D model parameters of the bodies of each participant and the real time positional and pose data of each participant to provide a posed 3D representation of each participant;
      2. Transforming the pose of each 3D representation of the participants based on the real camera parameters and adjustable provided virtual camera parameters to provide a virtual camera dependent 3D representation of each participant;
      3. Render a 2D representation of each participant based on virtual camera dependent posed 3D representation of each participant;
   ii. For the venue:
      1. Render a 2D representation of the objects on the venue based on the real and virtual camera parameters using 3D meshes of the objects of the venue to provide a virtual venue;
   iii. compose a virtual view of the sport event from the 2D representations of each participant and the 2D representation of the objects.
      14. A user device comprising a processor and a data storage, the user device configured to
      a. Receive from a data base in a cloud-based server to a user device data comprising
         i. a data set per person participating in the sport event, i.e. per participant, comprising parameters of a 3D model of the body of said person;
      b. Receive in real time based on a video stream of the sport event by the cloud based server:
         i. Camera parameters indicating the view of a real camera, i.e. real camera parameters;
         ii. Positional and pose data of each participant;
      c. Render in real time a virtual view of the sport event on the user device comprising the steps of:
         i. For each participant:
            1. Using the 3D model parameters of the bodies of each participant and the real time positional and pose data of each participant to provide a posed 3D representation of each participant;
            2. Transforming the pose of each 3D representation of the participants based on the real camera parameters and adjustable provided virtual camera parameters to provide a virtual camera dependent 3D representation of each participant;
            3. Render a 2D representation of each participant based on virtual camera dependent posed 3D representation of each participant;
         ii. For the venue:
            1. Render a 2D representation of the objects on the venue based on the real and virtual camera parameters using 3D meshes of the objects of the venue to provide a virtual venue;
      d. compose a virtual view of the sport event from the 2D representations of each participant and the 2D representation of the objects.

Disclosed is also a computer implemented method for rendering a video stream comprising a virtual view of a sport event on a user device:
a. Receiving from a data base in a cloud-based server to a user device data comprising
   i. a data set per person participating in the sport event, i.e. per participant, comprising parameters of a 3D model of the body of said person;
b. Receiving in real time based on a video stream of the sport event by the cloud based server:
   i. Camera parameters indicating the view of a real camera, i.e. real camera parameters;
   ii. Positional and pose data of each participant;
c. Rendering in real time a virtual view of the sport event on the user device comprising the steps of:
   i. For each participant:
      1. Using the 3D model parameters of the bodies of each participant and the real time positional and pose data of each participant to provide a posed 3D representation of each participant;
      2. Transforming the pose of each 3D representation of the participants based on the real camera parameters and adjustable provided virtual camera parameters to provide a virtual camera dependent 3D representation of each participant;
      3. Render a 2D representation of each participant based on virtual camera dependent posed 3D representation of each participant;
   ii. For the venue:
      1. Render a 2D representation of the objects on the venue based on the real and virtual camera parameters using 3D meshes of the objects of the venue to provide a virtual venue;
   iii. compose a virtual view of the sport event from the 2D representations of each participant and the 2D representation of the objects.
   The method describes the method which is performed on the user device. Since the description overlaps with the description of the method performed on the cloud-based server and the user device, an exact description is omitted.
   Disclosed is also a user device comprising a processor and a data storage, the user device configured to
d. Receive from a data base in a cloud-based server to a user device data comprising
   i. a data set per person participating in the sport event, i.e. per participant, comprising parameters of a 3D model of the body of said person;
e. Receive in real time based on a video stream of the sport event by the cloud based server:
   i. Camera parameters indicating the view of a real camera, i.e. real camera parameters;
   ii. Positional and pose data of each participant;
f. Render in real time a virtual view of the sport event on the user device comprising the steps of:
   i. For each participant:
      1. Using the 3D model parameters of the bodies of each participant and the real time positional and pose data of each participant to provide a posed 3D representation of each participant;
      2. Transforming the pose of each 3D representation of the participants based on the real camera parameters and adjustable provided virtual camera parameters to provide a virtual camera dependent 3D representation of each participant;
      3. Render a 2D representation of each participant based on virtual camera dependent posed 3D representation of each participant;
   ii. For the venue:
      1. Render a 2D representation of the objects on the venue based on the real and virtual camera parameters using 3D meshes of the objects of the venue to provide a virtual venue;
g. compose a virtual view of the sport event from the 2D representations of each participant and the 2D representation of the objects.

Disclosed is also a computer program product adapted to perform the methods described above and/or a data carrier comprising said computer program product.

### Examples

### Example 1: Training of the system

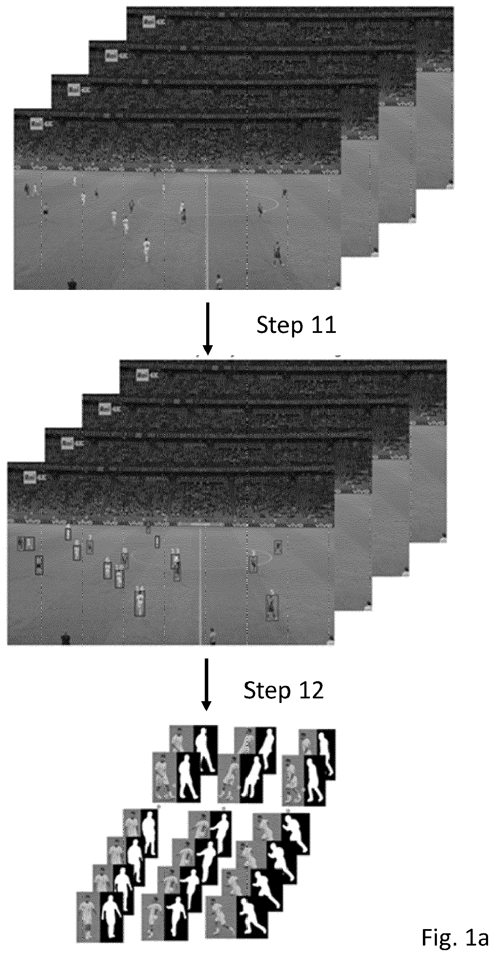

The top graph of figure 1a shows subsequent frames of a video stream (from front to back).

The video stream shows a sport event, here a football match. The participants of the sport event are visible in the video stream. The method in step 11 first detects the players via an image recognition algorithm in the respective frames and provides bounding boxes around the players. Based on the color of the jersey the players are grouped into different teams and based on the number of the jerseys or any other unique identifier like face recognition, the players are associated with a unique identifier, for example, their jersey number.

In step 12 the method provides sets of N, e.g. multiple or 10 tracklets, per player. The tracklets comprise sequences of patches limited by the bounding boxes containing representations of the respective player in consecutive frames. The patches forming a tracklet can be identified via an Intersection over Union (IOU) distance cost matrix which serves to identify associated patches in subsequent frames or by the identifier identifying the player in the bounding box. Each tracklet may contain at least 2, 5 or 10 patches identified by bounding boxes in consecutive frames. Consecutive frames can mean that the frames are following each other directly or at a regular distance, e.g. Consecutive frames can also mean every 2^{nd}, 3^{rd} or n^{th} frame in a series. Each section can be transformed to a mask, e.g. by a method like Deeplab V3. The mask serves to identify the area of the patch covered by player versus the background in the patch. In this way, the shape of the player and the motion of the shape can be determined. In addition, multiple (e.g. 10-30 or 20) joints of each player can be estimated for each patch (either in the original patch or the patch transformed to a mask). Thus, this step results in a data set providing multiple tracklets per player including (2D) patches, the corresponding (2D) masks and the localization of the joints. A team data set composed of the data sets for each player is provided.

In the following step 13 each team data set is fitted to motion captures relevant to sports with a parametric human body model parameter model comprising also a temporal encoder. Thus, a parametric human body model parameter (e.g. SMPL) fitting neural network (e.g. SMPL fitting CNN) including a temporal encoder is trained.

Two different parametric human body model parameter model (here SMPL) fitting approaches have been applied: one based on VIBE ("Video Inference for Human Body Pose and Shape Estimation", Kocabas, Muhammed and Athanasiou, Nikos and Black, Michael J., Proceedings IEEE Conf. on Computer Vision and Pattern Recognition (CVPR), pages 5252-5262, IEEE, June, 2020) and one based on ROMP ("Monocular, One-Stage, Regression of Multiple 3D People", Sun, Yu and Bao, Qian and Liu, Wu and Fu, Yili and Black, Michael J. and Mei, Tao, Proceedings of the IEEE/CVF International Conference on Computer Vision (ICCV), pages 11179-11188, October, 2021). Other parametric human body model parameter model fitting approaches may also be used. It is a particular advantage to use regression based parametric human body model parameter model, wherein regression is used to infer the 3D representation of the human that minimizes the joint reprojection error (see e.g. chapter Iterative 3D Regression with Feedback in "End-to-end Recovery of Human Shape and Pose", Kanazawa, Angjoo and Black, Michael J. and Jacobs, David W. and Malik, Jitendra, arXiv, 2017).

The joint reprojection error refers to the error between the location of the joints in an 2D representation of a 3D human model in the image plane obtained after determining parameters of the human body model with the original image or patch of that image of a frame of the video stream used for training the neural network.

Both VIBE and ROMP are regression-based SMPL fitting approaches: a neural network is trained to predict the SMPL parameters. This is different from optimization-based SMPL fitting approaches, where a 2D pose network (like OpenPose, see Cao, Zhe et al., 2018, "OpenPose: Realtime Multi-Person 2D Pose Estimation Using Part Affinity Fields", arXiv) predicts the location of 2D joints and then the SMPL parameters are obtained by minimizing the joint projection error. Regression-based networks are trained only one time and inference is usually fast. Optimization-based approaches require this optimization step for any new image and are usually slow (e.g. lmin per image on a desktop GPU).

However, the human body model (SMPL) fitting methods based on VIBE and ROMP are not the only fitting methods possible. Others may also be used.

VIBE processes tracking data, i.e. time sequences of patches. The player patches are provided by an object detection algorithm (e.g. network). The network comprises a backbone network (a CNN), a recurrent network (e.g. comprising gated recurrent unit layer(s) ) and a regressor. The backbone network extract feature vectors for each patch, which are passed as a set of feature vectors to a recurrent network (temporal encoder) and the obtained feature vectors are then passed to a regressor that predicts the SMPL pose and shape parameters for each patch.

ROMP processes the full image directly. Unlike VIBE, it removes the need to use an object detector and is therefore faster than VIBE. ROMP is composed of a backbone network and a regressor. The backbone extract two feature maps: the body center heatmap indicating the position of a player in an image rame and the SMPL feature map per frame. Each pixel of the body center heatmap gives a confidence score of the presence of a body center at this pixel location. The SMPL feature map is a volume containing the SMPL and camera parameters at each pixel. The pixel with high confidences of the body center heatmap are classified as body centers, and the corresponding pixel values in the SMPL feature map are sampled. As a result, the model predicts the SMPL parameters for people that are detected in the image.

In ROMP the ground truth body centers are defined as the center of the torso. If two people are closed one from the other, then the body centers are pushed apart. In the ROMP method a function for this purpose is defined, which is inspired from the electric repulsive field equation. This allows ROMP to handle challenging person-person occlusions.

ROMP is better than the original version of VIBE proposed by Kocabas et al. to handle person-person occlusions, due to this repulsion function. However, VIBE was improved in this application against occlusions, based on data augmentation with synthetic random occlusions. The player patches of the tracklet were masked with white circles and squares of random sizes at random locations. This data augmentation technique enforces the model to uses features of the past in the sequence in order to better handle occlusion has surprisingly improved the original VIBE method, in particular, with regard to video streams comprising multiple person.

To provide a realistic motion and realistic sequences of poses approaches using VIBE are trained with a motion discriminator, which is a neural network, especially a Generative adversarial network, GAN. Kocabas et al. have created a mocap database called AMASS AMASS (Archive of Motion Capture As Surface Shapes, Max Planck Institute) comprising a huge data set of sequences of motion sequences of humans defined by SMPL parameters (thus this data base provides ground truth data for the training). However, any motion discriminator, any neural model, capable of determining whether a sequence of inputted poses is realistic could be used.

The motion discriminator network learns to discriminate between real and fake motion (real being the AMASS SMPL data and fake being the output SMPL motion data provided by the regressor during training), the SMPL fitting network is trained to produce SMPL motion data that look real to the discriminator. As a result, VIBE enforces temporal consistency and produces realistic motion data.

In the present application the motion capture library used as ground truth training only comprises sports related motion (running, jumping, etc). Thus, the AMASS library has been filtered for motion caps of sports related motion before starting training.

The original version of ROMP (by Sun, Y. et al.) is not a temporal approach like VIBE, because it works with images whereas VIBE works with sequences of images. Therefore, there is some jitter in the SMPL data produced by ROMP. In this application temporal filtering techniques - based on tracking and smoothing - have applied to smooth the SMPL parameters obtained with ROMP and produce realistic motion data.

Those motion captures may originate from AMASS (Archive of Motion Capture As Surface Shapes, Max Planck Institute). Those relevant motion captures may be belong to the category of dribbling, running etc. Thus, the tracklets containing the 2D moving players are fitted to the moving 3D human bodies of the motion captures. In particular, the joints in the 2D patches of the tracklets can be fitted to the into 2D projected presentations of the human bodies of the parametric human model. In this way, the shape parameters of the parametric human body model can be obtained for each player and the neural network is trained based on an input video to associate the identified participant with a specific parametric human model shape parameter and a texture map, and to provide per frame parametric human model pose parameters for each participant.

During training the loss of the neural model can comprise several loss terms. The same losses apply to both VIBE and ROMP as used here and could also be applied to different methods.

The first loss used is the" joint/keypoint projection loss", which is commonly adopted in the literature (see Kocabas et al. "3.1. Temporal Encoder"), especially the 2D joint projection loss which compares the position of the 2D joints in the ground truth frames (e.g. determined by OpenPose ) with the projected position of the 3D joints of the human body model provided by the estimated parametric human body model parameters into the 2D image layer.

Optionally, a silhouette loss is also used, in particular, a soft silhouette loss.

Joints can be a weak signal as they do not contain enough shape information. 3D keypoints are very sparse information and usually captured in studio with low diversity in data, which limits the generalization of the model. 2D keypoints present depth ambiguities in the sense that multiple different configurations of 3D joints lead to the same 2D joint positions when projected on the image plane. That is why SMPL regressors can produce "monster meshes", as described by Kanazawa et al. (Angjoo Kanazawa and Michael J. Black and David W. Jacobs and Jitendra Malik, "End-to-end Recovery of Human Shape and Pose", IEEE Conference on Computer Vision and Pattern Recognition (CVPR), pages 7122-7131, 2018), when they are not trained with an motion discriminator for unpaired data. The present method does not require to use unpaired data.

A new supervision technique to overcome the lack of information inherent to keypoints, based on the silhouette is introduced. The data collection pipeline generates player masks automatically by running an image segmentation model (e.g. using Deeplap V3, see Chen, Liang-Chieh and Papandreou, George and Schroff, Florian and Adam, Hartwig, "Rethinking Atrous Convolution for Semantic Image Segmentation", arXiv, 2017). Player masks are usually accurately predicted in sports scenes and image segmentation is usually an easy task for sports scenes because the background is the court and is uniform. The training pipeline passes the SMPL mesh to Soft Rasterizer to generate a soft silhouette (see the below paragraph for a summary of the Soft Rasterizer technique, however another method for providing 2D silhouettes from 3D human body models may also be used). As SMPL bodies are undressed, the SMPL soft silhouette should always be inside the player mask. Therefore, our training pipeline penalizes the ratio of SMPL soft silhouette pixels that are outside the player mask. This strong supervision improved the SMPL fitting methods significantly in our tests compared to a training only supervised by the keypoint projection loss, and the "monster meshes" do not appear anymore.

The 2D silhouettes from 3D human body models may be provided by using a soft rasterizer.

Soft Rasterizer is a recent technique to make rendering operations differentiable (Liu, Shichen and Li, Tianye and Chen, Weikai and Li, Hao, "Soft Rasterizer: A Differentiable Renderer for Image-based 3D Reasoning", arXiv. Traditional rendering techniques involve rasterization (where for each pixel, we want to know which 3D primitive covers this pixel) and shading (where we compute the color of each pixel, it involves some lighting computations). Shading is naturally differentiable (relies on interpolation of vertex data) but rasterization is a discrete sampling operation (in both image x-y coordinates due to boundary and z coordinates due to occlusion and z-buffering) and therefore it has discontinuities and it is not differentiable. Soft rasterizer "softens" the discrete rasterization to enable differentiability. It makes triangles transparent at boundary and it blends multiple triangles per pixel. As a result, pixel color depends on several triangles, not only one, which makes pixel color differentiable with respect to triangle position.

Optionally, a shape variance loss is also used.

The variance of all shape vectors predicted from all tracklets corresponding to the same player is minimized during training, to enforce the consistency of the player shape for all body orientations.

After training an average value of the parametric human body model shape parameters is used, i.e. associated with a particular player. Thus, during inference the shape parameter does not need to be determined, but can be inferred from the identification of the player during inference (identification performed by jersey number recognition or face recognition or the like).

Optionally, the method can also be used by combining the regressor step yielding the parametric body model parameters with an optimizer method. This approach is called "pseudo-3D supervision".

Optimization-based methods can be used as additional supervision for training a regressor, leading to a more accurate regressor (see Kolotouros, Nikos and Pavlakos, Georgios and Black, Michael J. and Daniilidis, Kostas, "Learning to Reconstruct 3D Human Pose and Shape via Model-Fitting in the Loop", Proceedings of the IEEE/CVF International Conference on Computer Vision (ICCV), 2019). In the present application a similar approach is used: generating SMPL data with optimization and use the obtained SMPL parameters as ground-truth data during the training of the model.

In addition, (full) texture maps of the players can be generated with this algorithm. The texture map is a collection of textures that the SMPL algorithm can associate with the body parts of the avatars (like those in the middle of Fig. 1b). In this way, the avatars are provided during rendering with a texture covering the avatars, the texture indicating skin, hair, clothes etc.

The parametric human body model parameters (e.g. SMPL data) for each patch of the tracklets (obtained either with ROMP our VIBE) are obtained after training and can be used in the preparation of the texture maps. One of the parametric human body model parameters (the first parameter of the SMPL pose parameters) is the global body orientation. It can be used to create an histogram of body orientations. Some key patches are selected, e.g. by a method identifying those patches showing the participants with preselected body orientations. Each key patch can belong to a different interval of the histogram. An histogram of N bins leads to N key patches. However, the (key) patches used to provide the texture maps may also be selected on different criteria.

The texture map is provided from the key patches. The SMPL mesh determined by the trained method can be projected onto the 2D image plane. Subsequently, the fitted mesh on the image plane is rasterized. The uv coordinates by using the barycentric coordinates for each pixel in the rasterized output are determined (including interpolation). Finally the texture map is generated by sampling the key patches of the ground truth images with the obtained uv coordinates.

Several regions of the same image may correspond to the same pixel in the texture ap. To remove this ambiguity, the most orthogonal texel to the camera can be picked.

Optionally, appearance of the textured avatars, can be further optimized by fitting a rendered textured 2D mesh of the generated 3D avatars and a mask obtained thereof to the corresponding ground truth patches containing the (original) views of the respective players and the mask obtained thereof (output of step 12) using an image rendering algorithm (e.g. a (neural) image-to-image translation or a (neural) video-to-video translation method, ), for example an image refinement algorithm like U-Net or video-to-video translation method like vid2vid by Nvidia. Many parametric human body models are models of undressed humans and thus a textured parametric human model often does not appear realistic. For example, SMPL is a model of undressed bodies (it has been trained with the CAESAR dataset, composed of undressed body 3D scans). The rendered SMPL mesh does not look like a normal dressed body. The loss based on the silhouettes can be used in this case to provide details of the respective avatar that are not provided for by the textured human body model.

To recover/refine the details an image-translation network is used and the image-translation method synthesizes a realistic appearance. The training set for the neural network may comprise multiple different players in multiple poses. The optimization function may be L1 loss and image GAN loss. Thus, the trained image refinement algorithm can be used to further improve the rendered 2D mesh of the avatars. Thus, this step for example, provides a neural learning model and the weights obtained during training of said model.

### Example 2: Inference of the system

During inference there are novel view independent and dependent operations. With "novel view" a view is designated that is different from the real view a camera is capturing from a live sport event. This novel view is produced by capturing the 2D representations of the participants and the objects of the sports venue and transforming them into 3D representations thereof in virtual space. Since the 3D representations exist in virtual space, the view of those 3D representations can be manipulated by adjusting the camera parameters of a virtual camera viewing those 3D representations.

The novel view independent operations provide data that is independent of the potentially adjusted parameters of the virtual camera while the novel view dependent operations are dependent on the view of the virtual camera. The system/method performs computer load demanding operations including the novel view independent operations on computers which are remote to a user device. Furthermore, the output of the novel view independent operations is data of relatively small size. This output is transferred via any useful data connection to a user device and requires relatively little bandwidth.

On the other hand, the novel view dependent operations are performed on the user device and compared to the operations performed on the remote computer require less processing capabilities.

### Novel view independent operations

A (single) camera at a sports event provides a video stream of the sports event. This video stream is transmitted to a computer, which is remote to a user device. The computer is usually a cloud based server.

During interference a video stream of the relevant life sports event, in this case a football game, is inputted frame wise into the method, i.e. into the system performing interference, i.e. first into the remote computer.

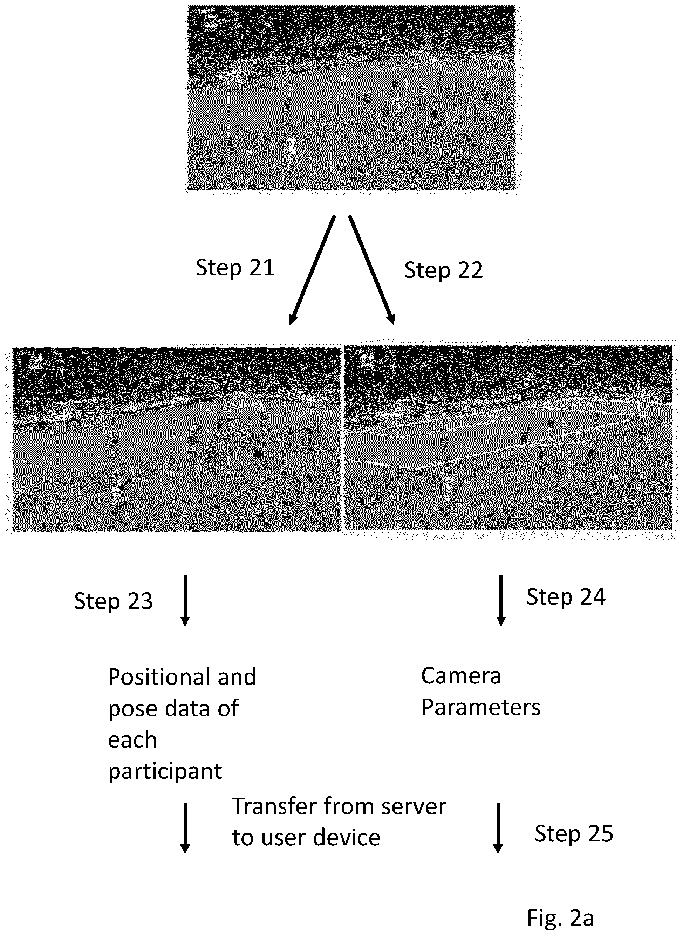

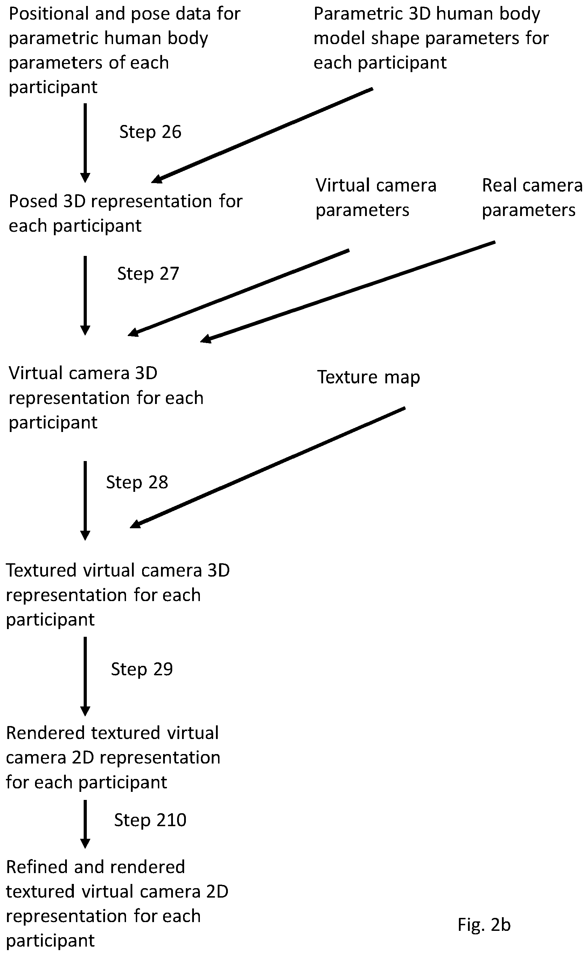

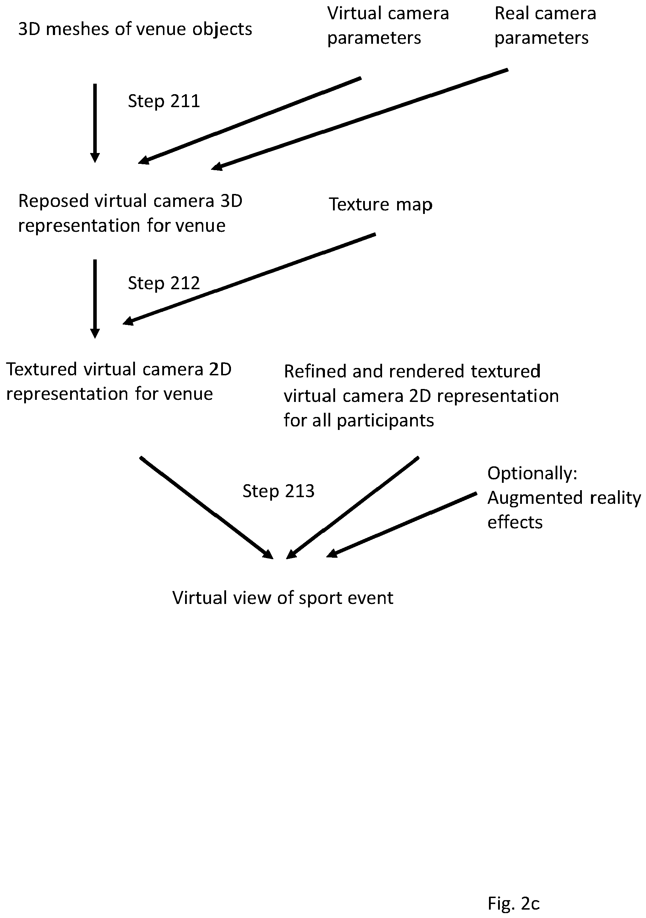

The participants of the sport event are visible in the video stream in the top illustration of Fig. 2a. The claimed method in step 21 first detects the players via an image recognition algorithm in the respective frames and provides bounding boxes around the players. Based on the color of the jersey the players are grouped into different teams and based on the number of the jerseys or any other unique identifier like face recognition, the players are associated with a unique identifier, for example, their jersey number when the jersey number is visible. The trained parametric human model with temporal encoder provides for each frame parameters of the parametric human model (position and pose) which allow to provide a 3D representation of the participants and objects.

Concurrently, the objects characterizing the venue of the sport event are detected in step 22 via object detection using a suitable algorithm. In the present case the edges of the pitch are detected. Based on known positional parameters of the objects of the sport event, in this case the pitch, the relevant camera parameters (camera position, rotation, translation) can be inferred.

Until this point of inference all the steps are provided on a remote computer, e.g. a cloud based server.

Thus, during the continuous processing of the video frames of the live sport event, data about the identification of the participants (individual identifier like jersey number, identification of the team to which participants belongs, team class), parameters like position and pose of the participant, and the relevant camera parameters are determined.

Accordingly, all the information that is required to reconstruct a 3D representation of the sport event with regard to position, pose, and (real) camera view are continuously transmitted to a user device for the time the sports event is being transmitted (e.g. via the internet, wireless or by wire).

In addition, data that is independent of the live stream is also transmitted to the user device. This live stream independent data can be transmitted to the use device at any time to the user device as long as it is present on the user device before the novel view dependent operations commence. For example, it can be transmitted to the user device on a regular basis before the request of a user device to receive a virtual view of the sport event or immediately after the request of a user device to receive a virtual view of the sport event.

This live stream independent data comprises per player a (full) texture map of the participant and optionally the venue objects, per participant the parametric human model shape parameters (e.g. SMPL shape parameters). Data required for an image refinement method (e.g. the weights of an image enhancement model, like a U-Net) and the weights of the human model parameters fitting model (e.g. one per team or a more general model trained on all potential participants).

The user device may have pre-installed or also download at request of a novel view, the software for conducting novel view synthesis, i.e. algorithms performing the synthesis of the 3D meshes of the participants and venue objects from the inputted data, reposition of the view of the virtual camera onto the 3D meshes of the participants and venue objects, texturing of the 3D meshes of the participants and venue objects, optional image refinement by neural rendering, rendering of the textured repositioned 3D meshes of the participants to participant patches and rendering the venue objects to a synthetic field, and compositing the player patches and the synthetic field to the novel view.

### Novel view dependent operations

At the beginning the user device starts the software for conducting novel view synthesis.

The user device requests the data required for a particular sport event.

The user device may have pre-installed or also download at request of a novel view, the software for conducting novel view synthesis, i.e. algorithms performing the synthesis of the 3D meshes of the participants and venue objects from the inputted data, reposition of the view of the virtual camera onto the 3D meshes of the participants and venue objects, texturing of the 3D meshes of the participants and venue objects, optional image refinement by neural rendering, rendering of the textured repositioned 3D meshes of the participants to participant patches and rendering the of the venue objects to a synthetic field, and compositing the player patches and the synthetic field to the novel view.

The user device receives per player a (full) texture map of the participant and optionally the venue objects, per participant the parametric human model shape parameters (e.g. SMPL shape parameters), and optionally data required for an image refinement method (e.g. the weights of an image or video enhancement model, like a U-Net).

During the continuous processing of the video frames of the live sport event, data about the identification of the participants (individual identifier like jersey number, identification of the team to which participants belongs, team class), parameters like position and pose of the participant, the relevant camera parameters.

The algorithms on the user device perform the synthesis of the 3D meshes of the participants using the positional and pose data and venue objects from the inputted data (Step 26).

At the user device a virtual view is selected which can be different from the real view associated with a particular frame of the video stream. For example, a virtual camera view may be chosen which is rotated by 180° to the real view and closer to the players.

The meshes of the participants and the venue objects are textured (in parallel) to a textured 3D representation of each participant (Step 28, Step 212).

Based on the virtual view and the real camera parameters (with respect to camera position, rotation and translation) the virtual (3D) view onto the meshes is adjusted (Step 27, Step 211), i.e. the projection into a 2D area is adjusted. The textured meshes may be subjected a neural rendering algorithm to provide 2D representations of the participants (Step 29). This step 29 may include providing a first 2D representation which is subsequently refined using a refinement algorithm (Step 210, for example, a 2D image to 2D image translation algorithm, for example, a U-Net that has been trained during the training phase on the patches of the players as ground truth and their rendered versions). Thus, player patches containing 2D rendered representations of the players are obtained.

Finally, the textured virtual camera 2D representation of the venue and the (optionally refined) rendered textured virtual camera 2D representations for all participants composed in step 213 to provide the final novel view of the live sport event. Optionally, this final novel view may be augmented with additional virtual objects like indicators, arrows etc.

This final novel view is displayed on a display connected to the user device.

## Claims

1. A computer implemented method for rendering a video stream comprising a virtual view of a sport event comprising: from a cloud-based server to a user device, provide parameters defining the appearance and motion of participants of the sport event, said parameters having been obtained by an archive monocular video stream of at least one previous event of the sport by fitting the parameters to a parametric human model of the participant of the sport event; from a cloud-based server to a user device, transmit continuously from a cloud based server to a user device, positional and pose data of the sport event participants of a video stream of a live sport event; on the user device, provide a neural rendering of a view of the live sport event based on the parameters defining the appearance and motion of sport event participants obtained by the at least one archive monocular video stream and the positional and pose data of the sport event participants of the video stream of the live sport event; by the user device, display the rendered view.

2. The computer implemented method of claim 1 for rendering a video stream comprising a virtual view of a sport event, comprising:
a. Transferring from a data base in a cloud-based server to a user device data comprising
i. a data set per person participating in the sport event, i.e. per participant, comprising parameters of a 3D model of the body of said person;
b. Determining in real time in a video stream of the sport event by the cloud based server:
i. Camera parameters indicating the view of a single real camera, i.e. real camera parameters;
ii. Positional and pose data of each participant;
c. Transferring in real time the real camera parameters and the positional and pose data of each participant from the cloud based server to the user device;
d. Rendering in real time a virtual view of the sport event on the user device comprising the steps of:
i. For each participant:
1. Using the 3D model parameters of the bodies of each participant and the real time positional and pose data of each participant to provide a posed 3D representation of each participant using a temporal parametric 3D human body model;
2. Transforming the pose of each 3D representation of the participants based on the real camera parameters and provided adjustable virtual camera parameters to provide a virtual camera dependent 3D representation of each participant;
3. Render a 2D representation of each participant based on virtual camera dependent posed 3D representation of each participant;
ii. For the venue:
1. Render a 2D representation of the objects on the venue based on the real and virtual camera parameters using 3D meshes of the objects of the venue to provide a virtual venue;
iii. compose a virtual view of the sport event from the 2D representations of each participant and the 2D representation of the objects.

3. The method of claim 1, wherein the data set per participant transferred from the cloud-based server comprises texture maps for each participant and, when rendering in real time a virtual view of the sport event, using the 3D model parameters of the bodies of each participant, the texture maps and the corresponding positional and pose data to provide a posed 3D representation of each participant, which is textured.

4. The method of claims 1 or 2, wherein the virtual camera parameters, i.e. the parameters indicating the view of a virtual camera onto the rendered sport event, are preset in the user device or have been provided by the user of the user device.

5. The method of any of the preceding claims, wherein the 2D representation of each participant before composing the virtual view of the sport event on the user device is refined using a neural rendering operation.

6. The method claim 5, wherein the neural rendering operation comprises:
a)that the data transferred from the cloud-based server comprises per team the weights for an image-refinement network model stored on the user device, wherein optionally, the image-refinement network model populated with the weights is used to refine the 2D representation of each participant before composing the virtual view of the sport event on the user device; or
b) that the data transferred from the cloud-based server comprises the weights for a neural radiance field (NeRF), wherein optionally, the player appearances are warped to a pose-independent canonical space based on the textured SMPL mesh, and a NeRF operates in the canonical space to predict color and density.

7. The method of any of the preceding claims, wherein the parametric 3D human body model is a Skinned Multi-Person Linear model, SMPL .

8. The method of any of the preceding claims, wherein the 3D model parameters are shape parameters.

9. The method of any of the preceding claims, wherein the data transferred from the cloud-based server comprises per team the weights of a temporal parametric human body model convolutional neural network (CNN), especially a SMPL fitting convolutional neural network, and the parametric human body model fitting CNN together with the human body model shape parameters, especially SMPL shape parameters, are used to provide a body mesh, especially a SMPL mesh.

10. The method of any of the preceding claims, wherein the data transferred from the cloud-based server comprises the weights of a temporal parametric human body model convolutional neural network (CNN), especially a SMPL fitting convolutional neural network, trained on multiple different teams and the parametric human body model fitting CNN together with the human body model shape parameters, especially SMPL shape parameters, are used to provide a body mesh, especially a SMPL mesh.

11. The method of claim 2, wherein the data set per participant transferred from the cloud-based server comprises texture maps for each participant and, when rendering in real time a virtual view of the sport event, using the SMPL meshes of the bodies of each participant, the texture maps and the corresponding positional and pose data to provide a posed 3D representation of each participant, which is textured.

12. The method of any of the preceding claims, wherein transferring in real time a stream of data from the sport event to the user device further comprises data designating the identity and team membership of each participant; or/and wherein determining the real camera parameters comprises detecting objects designating the edges of the venue of the sport event, aligning the determined edges with a representation of the edges characteristic for the sport event and thereby determining the real camera position in relation to the venue of the sport event; or/and
wherein the step of composing a virtual view of the sport event from the 2D representations of each participant and the 2D representation of the objects further comprises augmenting the virtual view of the sport event with virtual objects.

13. A method for training a system capable of providing of a novel view of monocular video stream comprising a sport event, comprising
a. identifying and tracking the participants of the sport event in the archive video,
b. training a neural model to provide parametric human body model parameters including shape and pose parameters for each participant comprising analysing the appearances and motions of a participant across the frames of a tracklet of the archive video stream, building a full texture map for each participant for the human body model of the participant, and training a neural model to provide image refinement for 2D image projections of a textured human body model of each participant.

14. The method of claim 13, further comprising performing image segmentation on the images forming the tracklet of the video stream to distinguish and separate the participants from the background thereby providing first masked images and
a. providing corresponding second masked images of the parametric human body models of the participants, and using the differences between first and second masked images to train the model providing the parametric human body model parameters or/and
b. providing corresponding third masked images of the parametric human body models of the participants masked with the full texture map, and using the differences between first and third masked images to train the model providing image refinement; or/and
wherein during training of the neural model providing the parametric human body model parameters the image patches of a tracklet are provided with random occlusions; or/and
wherein the neural model providing the parametric human body model parameters comprises a backbone module providing a feature vector characterizing the image patches of a tracklet, a recurrent network module outputting per patch of a tracklet feature vectors derived from the feature vectors outputted by the backbone module and information about the past and future frames within the tracklet, a regressor module providing the parametric human body module parameters for each patch of a tracklet; or/and
wherein a motion discriminator is used to discriminate whether the set of parametric human body module parameters for the patches of a tracklet provided by the regressor of the neural model providing the parametric human body model parameters appear real or not; or/and
the neural model comprises a backbone module providing feature vector characterizing the image patches of a tracklet, and three modules outputting per frame of a tracklet and per pixel a body center heatmap, a camera map and a human body module parameters; or/and
wherein during training the loss to perform training of the neural models comprises the joint reprojection loss, which is the difference between the location of the joints in the ground truth 2D image and the location of the joints in the projected 2D representations of the 3D representations of the parametric human model; or/and wherein during training the loss to perform training of the neural models comprises the silhouette loss, which is the difference between the 2D masks masking the silhouette of the participants in the ground truth 2D image and the 2D masks inferred from the 3D representations of the parametric human model; or/and
wherein during training the loss to perform training of the neural models comprises the shape variance loss, which is the difference between the 2D masks masking the silhouette of the participants in the ground truth 2D image and the 2D masks inferred from the 3D representations of the parametric human model; or/and
wherein during training the loss to perform training of the neural models comprises the variance of all shape vectors, which is the variance of all shape vectors predicted from all tracklets corresponding to the same participant; or/and
wherein during training the loss to perform training of the neural models comprises the motion discriminator loss, which is derived from the probability that a generated sequences of poses corresponds to a realistic sequence of poses.

15. A system comprising a cloud based server and a user device, wherein
the cloud based server is configured to
a. transfer from a data base in the cloud-based server to a user device data comprising
i. a data set per person participating in the sport event, i.e. per participant, comprising parameters of a 3D model of the body of said person;
b. determine in real time in a video stream of the sport event by the cloud based server:
i. Camera parameters indicating the view of a real camera, i.e. real camera parameters;
ii. Positional and pose data of each participant;
c. transfer in real time the real camera parameters and the positional and pose data of each participant from the cloud based server to the user device; and the user device is configured to
d. render in real time a virtual view of the sport event on the user device comprising the steps of:
i. For each participant:
1. Using the 3D model parameters of the bodies of each participant and the real time positional and pose data of each participant to provide a posed 3D representation of each participant;
2. Transforming the pose of each 3D representation of the participants based on the real camera parameters and adjustable provided virtual camera parameters to provide a virtual camera dependent 3D representation of each participant;
3. Render a 2D representation of each participant based on virtual camera dependent posed 3D representation of each participant;
ii. For the venue:
1. Render a 2D representation of the objects on the venue based on the real and virtual camera parameters using 3D meshes of the objects of the venue to provide a virtual venue;
e. compose a virtual view of the sport event from the 2D representations of each participant and the 2D representation of the objects.

16. A computer implemented method for rendering a video stream comprising a virtual view of a sport event on a user device:
a. Receiving from a data base in a cloud-based server to a user device data comprising
i. a data set per person participating in the sport event, i.e. per participant, comprising parameters of a 3D model of the body of said person;
b. Receiving in real time based on a video stream of the sport event by the cloud based server:
i. Camera parameters indicating the view of a real camera, i.e. real camera parameters;
ii. Positional and pose data of each participant;
c. Rendering in real time a virtual view of the sport event on the user device comprising the steps of:
i. For each participant:
1. Using the 3D model parameters of the bodies of each participant and the real time positional and pose data of each participant to provide a posed 3D representation of each participant;
2. Transforming the pose of each 3D representation of the participants based on the real camera parameters and adjustable provided virtual camera parameters to provide a virtual camera dependent 3D representation of each participant;
3. Render a 2D representation of each participant based on virtual camera dependent posed 3D representation of each participant;
ii. For the venue:
1. Render a 2D representation of the objects on the venue based on the real and virtual camera parameters using 3D meshes of the objects of the venue to provide a virtual venue;
iii. compose a virtual view of the sport event from the 2D representations of each participant and the 2D representation of the objects.

17. A user device comprising a processor and a data storage, the user device configured to
a. Receive from a data base in a cloud-based server to a user device data comprising
i. a data set per person participating in the sport event, i.e. per participant, comprising parameters of a 3D model of the body of said person;
b. Receive in real time based on a video stream of the sport event by the cloud based server:
i. Camera parameters indicating the view of a real camera, i.e. real camera parameters;
ii. Positional and pose data of each participant;
c. Render in real time a virtual view of the sport event on the user device comprising the steps of:
i. For each participant:
1. Using the 3D model parameters of the bodies of each participant and the real time positional and pose data of each participant to provide a posed 3D representation of each participant;
2. Transforming the pose of each 3D representation of the participants based on the real camera parameters and adjustable provided virtual camera parameters to provide a virtual camera dependent 3D representation of each participant;
3. Render a 2D representation of each participant based on virtual camera dependent posed 3D representation of each participant;
ii. For the venue:
1. Render a 2D representation of the objects on the venue based on the real and virtual camera parameters using 3D meshes of the objects of the venue to provide a virtual venue;
d. compose a virtual view of the sport event from the 2D representations of each participant and the 2D representation of the objects.

18. A computer program product adapted to perform the method of any of claims 1-12 or claims 13-14 and/or a data carrier comprising said program.
